# EUROPEAN PATENT APPLICATION

(11) **EP 4 793 539 A1**
(43) Date of publication of application: **19.08.2026**
(21) Application number: 26157162.4
(22) Date of filing: 09.02.2026
(51) Int. Cl.: F21V 8/00

(54) **BACKLIGHT MODULE**

(30) Priority: 14.02.2025 TW 114105581
(71) Applicant: Darwin Precisions Corporation, Hukou Township 303 (TW)
(72) Inventor: HSIAO, Sheng-Chang, 303 Hukou Township, Hsinchu County (TW); CHIU, Yu-Huan, 303 Hukou Township, Hsinchu County (TW); SHEN, Wen-Tai, 303 Hukou Township, Hsinchu County (TW)
(74) Representative: Zacco Denmark A/S

(57) **Abstract**

A backlight module (100) includes a light source assembly (110), a privacy film (120), a light-emitting element (130), and a light guide plate (140). The light source assembly (110) is adapted to emit a light beam. The privacy film (120) is disposed on a transmission path of the light beam. The light guide plate (140) is disposed on a side of the privacy film (120) facing away from the light source assembly (110). The light guide plate (140) has a first light incident surface (141), a surface (142), and a plurality of optical microstructures (M). The light incident surface (141) is opposite to the light-emitting element (130). The surface (142) faces the privacy film (120) and is connected to the first light incident surface (141). The optical microstructures (M) are concave or protruding from the surface (142), and there is a height (H) between each of the optical microstructures (M) and the surface (142), wherein each height (H) is decreased in a normal direction of the first light incident surface (141).

## Description

### FIELD OF THE INVENTION

The present invention relates to a light source module, and more particularly to a backlight module.

### BACKGROUND OF THE INVENTION

The components of a liquid crystal display (LCD) mainly include a backlight module, a display panel, and an outer frame. With the widespread use of LCDs in various applications, many backlight modules are additionally configured to provide a privacy function. For example, in a sharing mode, the backlight module emits a greater amount of light beams at a larger angle, thereby providing a wider viewing angle. On the contrary, in a privacy mode, the backlight module emits a greater amount of light beams at a smaller angle, thereby narrowing the viewing angle.

Generally, a backlight module may guide light beams to be emitted at a large angle through optical microstructures formed on a light guide plate, thereby providing a wider viewing angle in a sharing mode. However, conventional optical microstructures are unable to guide light beams uniformly out of the light guide plate, resulting in optical taste issues of the backlight module.

### SUMMARY OF THE INVENTION

The present invention provides a backlight module for enhancing the optical taste.

In order to achieve one, some, or all the aforementioned objectives, or other objectives, a backlight module is provided with a light source assembly, a privacy film, a first light-emitting element, and a first light guide according to one embodiment of the present invention. The light source assembly is adapted to emit a light beam. The privacy film is disposed on a transmission path of the light beam. The first light guide plate is disposed on a side of the privacy film away from the light source assembly. The first light guide plate includes a first light incident surface, a surface, and a plurality of optical microstructures. The first light incident surface is opposite to the first light-emitting element. The surface faces the privacy film and is connected to the first light incident surface. The optical microstructures are recessed or protrude from the surface. Each of the microstructures has a height relative to the surface, and each of the heights gradually decreases along a normal direction of the first light incident surface.

In an embodiment of the present invention, the surface includes a near-light region, an intermediate region, and a far-light region. The near-light region is connected to the first light incident surface. The first light guide plate includes an end surface opposite to the first light incident surface, and the far-light region is connected to the end surface. The intermediate region is disposed between the near-light region and the far-light region. The optical microstructures include a plurality of near-light microstructures, a plurality of intermediate microstructures, and a plurality of far-light microstructures. The near-light microstructures are disposed in the near-light region and have a first maximum height difference among the near-light microstructures. The intermediate microstructures are disposed in the intermediate region and have a second maximum height difference among the intermediate microstructures. The far-light microstructures are disposed in the far-light region and have a third maximum height difference among the far-light microstructures. The second maximum height difference is greater than the first maximum height difference and the third maximum height difference.

In an embodiment of the present invention, the two adjacent near-light microstructures along the normal direction have a first height difference therebetween. The twoe adjacent intermediate microstructures along the normal direction have a second height difference therebetween. The two adjacent far-light microstructures along the normal direction have a third height difference therebetween. The second height difference is greater than the first height difference and the third height difference.

In an embodiment of the present invention, a length of the surface of the first light guide plate along the normal direction is L, a length of the intermediate region along the normal direction is L1, and 0.2L ≦ L1 ≦ 0.7L.

In an embodiment of the present invention, at least a part of the optical microstructures are arranged irregularly along the normal direction.

In an embodiment of the present invention, the optical microstructures include a plurality of microstructures arranged along the normal direction, and a distance between the two adjacent microstructures increases gradually along the normal direction.

In an embodiment of the present invention, the optical microstructures include a plurality of microstructures. The microstructures are arranged along the normal direction and include two first microstructures and two second microstructures. The two first microstructures are adjacent to each other and have a distance D1 therebetween, and the two second microstructures are adjacent to each other and have a distance D2 therebetween, where 10⁻⁶ ≦ |D1-D2|/D1 ≦ 10⁻⁴.

In an embodiment of the present invention, 0.1 nm ≦ ID1-D21 ≦ 0.5 nm.

In an embodiment of the present invention, 0.1 nm ≦ |D1-D2| ≦ 0.5 nm, and 0.01 mm ≦ D2 ≦ 0.07 mm.

In an embodiment of the present invention, each of the optical microstructures has a top on one side away from the surface, and each of the optical microstructures has a maximum height MH between each of the tops and the surface. Each of the optical microstructures has a maximum width W in the normal direction, and 0.2 ≦ MH/W ≦ 0.5.

In an embodiment of the present invention, the optical microstructures include a plurality of first-row microstructures and a plurality of second-row microstructures. The first-row microstructures and the second-row microstructures are arranged along the normal direction, and the first-row microstructures and the second-row microstructures are arranged side by side. The optical microstructure closest to the first light incident surface in the first-row microstructures is spaced from the first light incident surface by a first distance. The optical microstructure closest to the first light incident surface in the second-row microstructures is spaced from the first light incident surface by a second distance. The first distance is different from the second distance.

In an embodiment of the present invention, the light source assembly includes a second light guide plate and a second light-emitting element. The second light guide plate includes a second light incident surface and a light emitting surface connected to each other. The light emitting surface faces the privacy film. The second light-emitting element and the second light incident surface are opposite to each other.

In an embodiment of the present invention, the light source assembly further includes a third light guide plate. The third light guide plate is disposed between the second light guide plate and the privacy film. The third light guide plate includes a third light incident surface corresponding to the second light incident surface. The second light-emitting element is disposed opposite to the second light incident surface and the third light incident surface.

In an embodiment of the present invention, the surface of the first light guide plate includes a first edge and a second edge connected to the first edge. The light emitting surface of the second light guide plate includes a third edge aligned with the first edge. The first light-emitting element is disposed along the second edge, and the second light-emitting element is disposed along the third edge.

In the backlight module of the present invention, the optical microstructures employed in the first light guide plate are characterized by a gradually decreasing height along the normal direction. Specifically, the optical microstructures with heights that gradually decrease along the normal direction can reduce the light emission brightness on the side of the first light guide plate near the first light incident surface, and increase the light emission brightness on the side away from the first light incident surface. Based on the foregoing, the optical microstructures can effectively improve the light emission uniformity of the first light guide plate, thereby enhancing the optical taste of the backlight module.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

FIG. 1 is a schematic side view of a backlight module according to an embodiment of the present invention;
FIG. 2 is a schematic cross-sectional view of the magnified optical microstructure in FIG. 1;
FIG. 3 is a schematic bottom view of the first light guide plate in FIG. 1;
FIG. 4 is a schematic diagram showing a relationship between the height and the location of the optical microstructures in FIG. 1;
FIG. 5 is a schematic diagram showing a relationship between the light emission brightness and the horizontal view angle of the optical microstructures in FIG. 1;
FIG. 6 is a schematic bottom view of the first light guide plate according to another embodiment of the present invention;
FIG. 7 is a schematic bottom view of the first light guide plate according to another embodiment of the present invention;
FIG. 8 is a schematic bottom view of the first light guide plate according to another embodiment of the present invention;
FIG. 9 is a schematic side view of a backlight module according to another embodiment of the present invention;
FIG. 10 is a schematic cross-sectional view of the magnified optical microstructure in FIG. 9;
FIG. 11 is a schematic side view of a backlight module according to another embodiment of the present invention;
FIG. 12 is a schematic side view of a backlight module according to another embodiment of the present invention; and
FIG. 13 is a schematic cross-sectional view of the magnified optical microstructure in FIG. 12.

### DETAILED DESCRIPTION OF PREFERRED EMBODIMENTS

In the following description of embodiments according to the present invention, terms indicating orientation or positional relationships, such as "upper," "lower," etc., are described based on the orientation or positional relationships shown in the corresponding drawings. These terms are used solely for the convenience of describing the invention and are not intended to limit the invention or to imply that the referenced elements must have a particular orientation or be constructed in a particular orientation. Furthermore, the terms "first," "second," and the like, as used in this specification or the claims, are employed merely to designate names of elements or to distinguish between different embodiments or ranges and are not intended to limit the number of elements. Unless limited otherwise, the terms "connected" or "coupled" as used in this specification or the claims may refer to either a direct connection between two elements without the presence of other elements or an indirect connection through the presence of other elements.

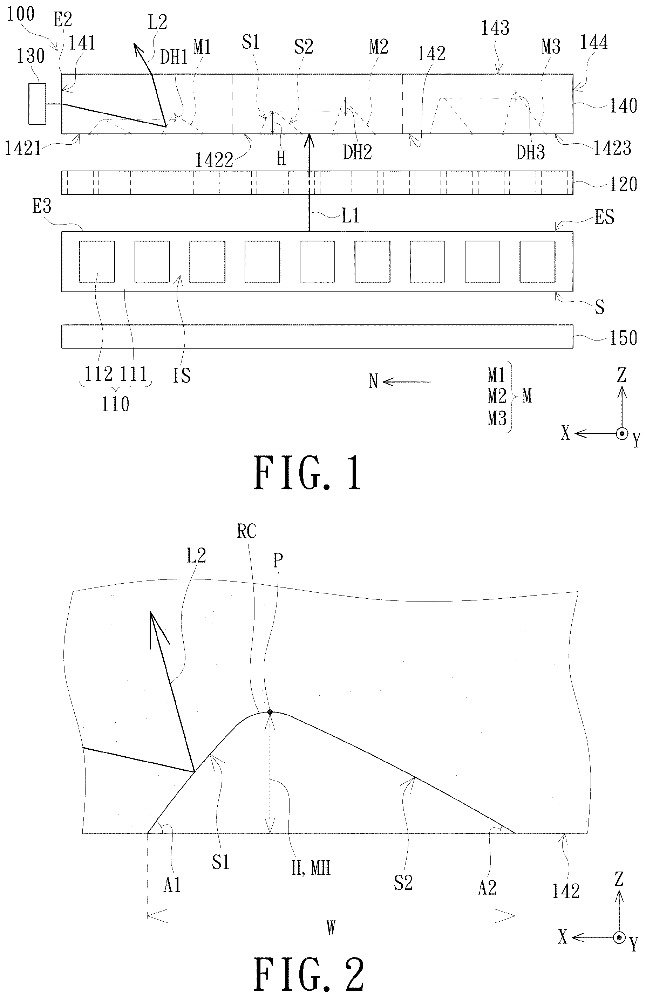

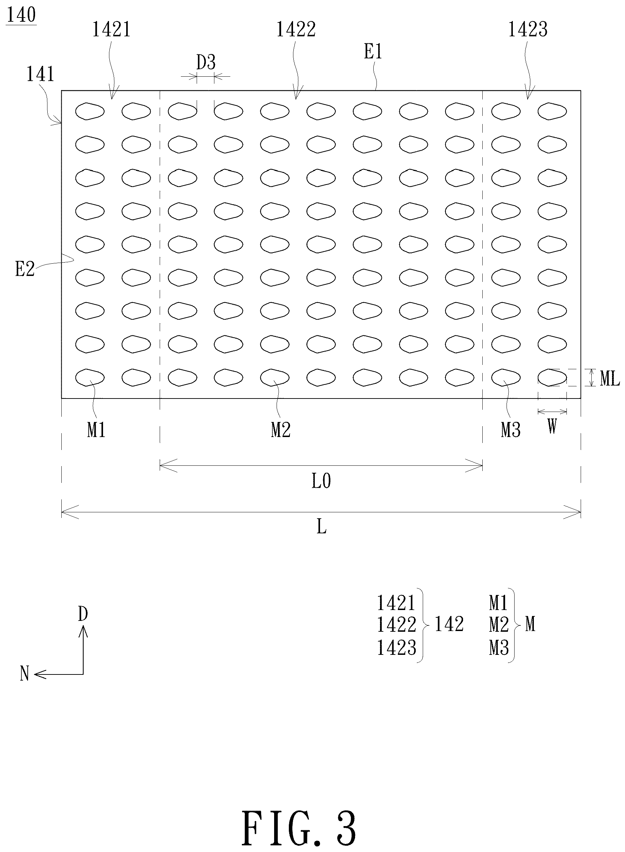

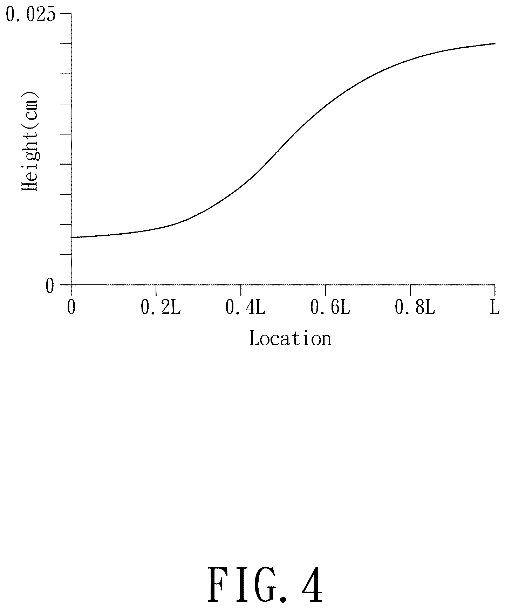

FIG. 1 is a schematic side view of a backlight module according to an embodiment of the present invention. FIG. 2 is a schematic cross-sectional view of the magnified optical microstructure in FIG. 1. FIG. 3 is a schematic bottom view of the first light guide plate in FIG. 1. FIG. 4 is a schematic diagram showing a relationship between the height and the location of the optical microstructures in FIG. 1. Please refer to FIG. 1. A backlight module 100 includes a light source assembly 110, a privacy film 120, a first light-emitting element 130, and a first light guide plate 140. The light source assembly 110 is adapted to emit light beams L1. The privacy film 120 is disposed on the transmission path of the light beams L1. The first light guide plate 140 is disposed on one side of the privacy film 120 away from the light source assembly 110. The first light guide plate 140 includes a first light incident surface 141, a surface 142, and a plurality of optical microstructures M. The first light incident surface 141 and the first light-emitting element 130 are opposite to each other. The surface 142 faces the privacy film 120 and is connected to the first light incident surface 141. The optical microstructures M are recessed from the surface 142. Each of the optical microstructures M has a height H relative to the surface 142. Each of heights H gradually decreases along a normal direction N of the first light incident surface 141. More specifically, the height H may be defined as the distance between each of the optical microstructures M and the surface 142 in a conceptual cross-sectional plane (X-Z plane) that is perpendicular to both the first light incident surface 141 and the surface 142.

The light source assembly 110 may include an edge type backlight module or a direct type backlight module. An edge type backlight module is illustrated in the present embodiment. For example, the light source assembly 110 may include a second light guide plate 111 and a second light-emitting element 112. The second light guide plate 111 includes a second light incident plane IS and a light emitting surface ES connected to each other. The light emitting surface faces the privacy film 120. The second light-emitting element 112 and the second light incident surface IS are disposed opposite to each other. Specifically, the second light-emitting element 112 may generate light beams L1. The second light-emitting element 112 may include a light-emitting diode (LED). The second light guide plate 111 may be a rectangular cuboid, and the second light-emitting element 112 may be, for example but not limited to, disposed on a longer side of the second light guide plate 111. In one embodiment, a surface S of the second light guide plate 111, which is away from the light emitting surface ES, may include a plurality of optical microstructures (not illustrated). The optical microstructures may, for example but not limited to, protrude from the surface S and have a triangular prism or spherical shape. In addition, a reflective sheet 150 may be disposed on one side of the second light guide plate 111 away from the privacy film 120 so as to increase the light utilization rate of the backlight module 100. However, in an embodiment where the light source assembly 110 adopts the direct type backlight module 100, the reflective sheet 150 may be omitted.

In the present embodiment, the privacy film 120 may decrease the light emission angle of the light beams L1. As such, when the light source assembly 110 is activated and the first light-emitting element 130 is turned off, the backlight module 100 will provide a less viewing angle (i.e., privacy mode). In the present embodiment, the privacy film 120 may, for example, include an optical grating. In an embodiment, the privacy film 120 may include a liquid crystal layer, thereby decreasing the light emission angle by controlling the rotation of light crystal molecules.

In the present embodiment, the first light-emitting element 130 may provide the light beams L2 required by the backlight module 100 in a sharing mode. The first light-emitting element 130 may include a light-emitting diode (LED), but the invention is not limited thereto. Please refer to FIG. 1 and FIG. 3. The surface 142 of the first light guide plate 140 may include a first edge E1 and a second edge E2 connected to the first edge E1. The light emitting surface ES of the second light guide plate 111 includes a third edge E3 aligned with the first edge E1. The first light-emitting element 130 may be arranged along the second edge E2, and the second light-emitting element 112 may be arranged along the third edge E3. Specifically, the first edge E1 and the third edge E3 may extend along a direction X, and the second edge E2 may extend along a direction Y. Furthermore, the surface 142 may have a rectangular shape, the first edge E1 may be a longer side of the surface 142 (as illustrated in FIG. 3), and the second edge E2 may be a shorter side of the surface 142. The first light incident surface 141 may be connected to the shorter side. In other words, the first light-emitting element 130 may, for example but not limited to, be arranged along the shorter side of the first light guide plate 140. The first light-emitting element 130 and the second light-emitting element 112 may be disposed opposite to each other and on different sides of the first light guide plate 111 and the second light guide plate 140. Specifically, the second light-emitting element 112 may be disposed on the longer side (i.e., the third edge E3) of the second light guide plate 140, and the first light-emitting element 130 may be disposed on the short side (i.e., the second edge E2), thereby controlling the light emission brightness of the backlight module 100 in a horizontal viewing angle.

Please refer to FIG. 1 and FIG. 2. The first light guide plate 140 may guide the light beams L2 generated by the first light-emitting element 130 to emit from the first light incident surface 143. Specifically, the optical microstructures M of the first light guide plate 140 may guide the light beam L2 to emit with a large angle from the first light incident surface 143. Accordingly, when the first light-emitting element 130 is activated, the backlight module 100 may provide a greater viewing angle (i.e., the sharing mode).

The optical microstructures M may reflect the light beams L2 to the light emitting surface 143 of the first light guide plate 140. Also, each of the optical microstructures M may provide a varied amount of incident light based on its heights H and then cause a varied amount of reflected light, thereby enhancing the light output uniformity of the first light guide plate 140. Accordingly, the optical taste of the backlight module 100 in the sharing mode can be improved. Furthermore, each of the optical microstructures M includes a peak P on the side away from the surface 142, and each of the optical microstructures M has a maximum height MH, for example, between each of the peak P and the surface 142. Each of the optical microstructures M has the height H, such as the maximum height MH. Furthermore, the peak P may be disposed in the conceptual plane (X-Z plane). The maximum height MH of each optical microstructures M is, for example, the maximum distance between the peak P and the surface 142 in the conceptual plane. In an embodiment, the maximum height MH of each of optical microstructures M is between 0.001 mm and 0.025 mm, such as 0.001 mm, 0.002 mm, 0.005 mm, 0.01 mm, 0.015 mm, 0.02 mm, and 0.025mm, but the invention is not limited thereto.

Please refer to FIG. 1 and FIG. 3. In the present embodiment, the surface 142 of the first light guide plate 140 includes a near-light region 1421, an intermediate region 1422, and a far-light region 1423. The near-light region 1421 is connected to the first light incident surface 141. The first light guide plate 140 includes an end surface 144 opposite to the first light incident surface 141. The far-light region 1423 is connected to the end surface 144. The intermediate region 1422 is disposed between the near-light region 1421 and the far-light region 1423. The optical microstructures M include a plurality of near-light microstructures M1, a plurality of intermediate microstructures M2, and a plurality of far-light microstructures M3. The near-light microstructures M1 are disposed in the near-light region 1421 and have a first maximum height difference DH1 among the near-light microstructures M1. It is noted that the first maximum height difference DH1 is defined as the difference between the greatest and smallest heights, relative to the surface 142, among all the near-light microstructures M1, and is not limited to the height difference between the two adjacent near-light microstructures M1 as illustrated in FIG. 1. The intermediate microstructures M2 are located in the intermediate region 1422 and have a second maximum height difference DH2. Similarly, the second maximum height DH2 is defined as the difference between the greatest and smallest heights, relative to the surface 142, among all the intermediate microstructures M2, and is not limited to the height difference between the two adjacent near-light microstructures M2 as illustrated in FIG. 1. The far-light microstructures M3 are disposed in the far-light region 1423 and have a third maximum height difference DH3 among the far-light microstructures M3. The third maximum height DH3 is defined as the difference between the greatest and smallest heights, relative to the surface 142, among all the far-light microstructures M3, and is not limited to the height difference between the two adjacent far-light microstructures M3 as illustrated in FIG. 1. The second maximum height difference DH2 is greater than the first maximum height difference DH1 and the third maximum height difference DH3.

In brief, the variation in height H of the intermediate microstructures M2 located in the intermediate region 1422 is greater than the variations in height H of the near-light microstructures M1 located in the near-light region 1421 and the far-light microstructures M3 located in the far-light region 1423. As a result, the light beams L2 reflected by the intermediate microstructures M2 can exhibit a greater range of emission angles compared to those reflected by the near-light microstructures M1 and the far-light microstructures M3, thereby enhancing the light output uniformity of the light emitting surface 143 corresponding to the intermediate region 1422. In addition, compared with the intermediate microstructures M2 and the far-light microstructures M3, the near-light microstructures M1, having a lower average height, can reduce the amount of reflection of the light beams L2, thereby decreasing the light emission brightness of the light emitting surface 143 corresponding to the near-light region 1421. Furthermore, compared to the intermediate microstructures M2 and the near-light microstructures M1, the far-light microstructures M3, having a higher average height, can increase the amount of reflection of the light beams L2, thereby enhancing the light emission brightness of the light emitting surface 143 corresponding to the far-light region 1423.

In the present embodiment, the two adjacent near-light microstructures M1 along the normal direction N have a first height difference. The first height difference is, for example, less than or equal to the first maximum height difference DH1. Similarly, the two adjacent intermediate microstructures M2 along the normal direction N have a second height difference. In the present embodiment, the second height difference is, for example, less than or equal to the second maximum height difference DH2. Similarly, the two adjacent far-light microstructures M3 along the normal direction N have a third height difference. In the present embodiment, the third height difference is, for example, less than or equal to the third maximum height difference DH3. The second height difference is greater than the first height difference and the third height difference. In an embodiment, the first height difference, the second height difference, and the third height difference are different from the first maximum height difference DH1, the second maximum height difference DH2, and the third maximum height difference DH3, respectively.

In addition, in the present embodiment, the surface 142 of the first light guide plate 140 has a length L in the normal direction N, and the intermediate region 1422 has a length L0 in the normal direction N, where 0.2L ≦ L0 ≦ 0.7L. In other words, the length L0 of the intermediate region 1422 is between 0.2L and 0.7L. A length of the near-light region 1421 in the normal direction N is approximately less than 0.2L. A length of the far-light region 1423 is between 0.7L and L. In one embodiment, the variation in heights of the near-light microstructures M1, the intermediate microstructures M2, and the far-light microstructures M3 are as shown in FIG. 4, but the invention is not limited thereto.

Please refer to FIG. 2 and FIG. 3. In the present embodiment, each of the optical microstructures M has a maximum width W in the normal direction N, where 0.2 ≦ MH/W ≦ 0.5. Specifically, since the first light guide plate 140 is disposed on the transmission path of the light beams L1 from the light source assembly 110, the aspect ratio range (i.e., MH/W) not only allows control of the light emitting angle of the light beams L1, but also enables a reduction in the size of the optical microstructures M. As a result, bright spots caused by the light beam L1 (as illustrated in FIG. 1) passing through the optical microstructures M can be reduced, thereby improving the light output uniformity of the backlight module 100 in the privacy mode. In an embodiment, the maximum width W of the optical microstructures M is, for example, between 0.005 and 0.050 mm, such as 0.005 mm, 0.01 mm, 0.015 mm, 0.02 mm, 0.025 mm, 0.03 mm, 0.035 mm, 0.04 mm, 0.045 mm, and 0.05 mm. In addition, each of the optical microstructures M has a maximum length ML in a direction D perpendicular to the normal direction N, which is between 0.002 mm and 0.050 mm, such as 0.005 mm, 0.008 mm, 0.01 mm, 0.015 mm, 0.02 mm, 0.025 mm, 0.03 mm, 0.035 mm, 0.04 mm, 0.045 mm, and 0.05 mm, but the invention is not limited thereto.

In comparison with the prior art, the backlight module 100 of the present embodiment adopts the optical microstructures M in the first light guide plate 140, wherein each of the optical microstructures M is characterized by a height H that gradually decreases along a normal direction N. Specifically, the optical microstructures M, with height H decreasing along the normal direction N, can reduce the light emission brightness on the side of the first light guide plate 140 close to the first light incident surface 141, while increasing the light emission brightness on the side of the first light guide plate 140 away from the first light-incident surface 141. Accordingly, the optical microstructures M can effectively enhance the light output uniformity of the first light guide plate 140, thereby improving the optical taste of the backlight module 100.

Furthermore, please refer to FIG. 1 and FIG. 2. Each of the optical microstructures M includes a first convex surface S1, a second convex surface S2, and a rounded corner RC. The first convex surface S1 and the second convex surface S2 stand on the surface 142, and the rounded conner RC is connected to the first convex surface S1 and the second convex surface S2. The first convex surface S1 faces toward the first light incident surface 141, and the second convex surface S2 faces away from the first light incident surface 141. Specifically, the light beams L2 generated by the first light-emitting element 130 are projected to the first convex surface S1 and the rounded corner RC. Accordingly, the height H of each of the optical microstructures M may affect the amount of light received by the first convex surface S1, thereby changing the amount of the light beams L2 that are reflected by each of the optical microstructures M. A portion of the light is incident upon the second convex surface S2 and the rounded corner RC through a total internal reflection occurred at the light-emitting surface 143. More specifically, the first convex surface S1 of the optical microstructure M may, for example, protrude toward the first light incident surface 141. In this manner, the first convex surface S1 can slightly scatter the light beams L2, thereby enhancing the light output uniformity of the first light guide plate 140. The rounded corner RC may, for example, be slightly arched and stand on the surface 142, and may include a curved surface protruding toward the light emitting surface 143 to scatter the incident light beam L2, further improving the light output uniformity of the first light guide plate 140. The second convex surface S2 may protrude in a direction away from the first light incident surface 141 to scatter a portion of the light beams L2 toward the light emitting surface 143, thereby further enhancing the light output uniformity of the first light guide plate 140.

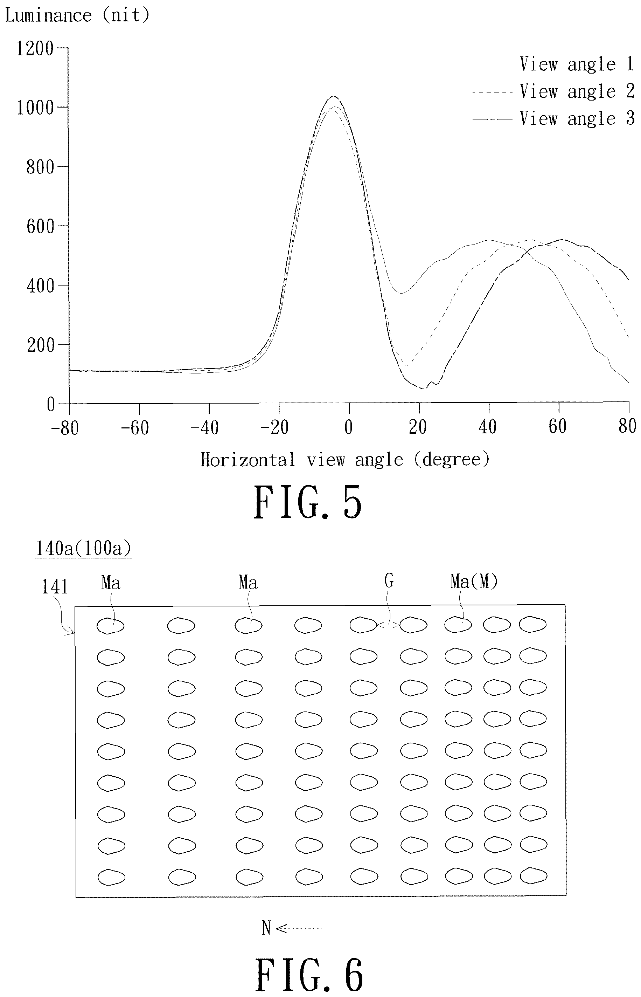

FIG. 5 is a schematic diagram showing a relationship between the light emission brightness and the horizontal view angle of the optical microstructures according to an embodiment in FIG. 1. Please refer to FIG. 1 and FIG. 5. The view angle 1, view angle 2, and view angle 3 are all measured based on the observation of light emitting surface 143 from the end surface 144 of the first light guide plate 140. Specifically, using the normal direction (Z direction) of the light emitting surface 143 as a reference, an angle between the view angle 1 and the Z direction is approximately 60 degrees, an angle between the view angle 2 and the Z direction is approximately 50 degrees, and an angle between the view angle 3 and the Z direction is approximately 40 degrees. Please refer to FIG. 1, FIG. 2, and FIG. 5. In an embodiment, each of the first convex surface S1 and the surface 142 form a first angle A1 between 30 degrees and 70 degrees, such as 30 degrees, 40 degrees, 45 degrees, 50 degrees, 55 degrees, 60 degrees, 65 degrees, and 70 degrees. In an embodiment, the first angle A1 is, for example, between 40 degrees and 60 degrees. Accordingly, for a horizontal view angle of approximate -60 degrees to -40 degrees, the light emission brightness of the backlight module 100 can be improved, thereby allowing the backlight module 100 to provide an asymmetric view angle in the sharing mode. In another embodiment, the first angle A1 may be between 47 degrees and 53 degrees. When the backlight module 100 is operated in the sharing mode, a portion of light beam L2 is reflected by the first convex surface S1 and emitted at a large angle from the first light guide plate 140, thereby increasing the light emission brightness of the backlight module 100 at the horizontal view angle of between -80 degrees and -20 degrees. On the other hand, each of the second convex surface S2 and the surface 142 form a second angle A2, which is, for example, between 20 degrees and 40 degrees, such that a portion of the light beam L2 may be reflected and then emits at a large angle from the first light guide plate 140, thereby increasing the viewing angle of the backlight module 100. A radius of curvature of the rounded corner RC is, for example, approximately between 0.001 mm and 0.005 mm, for further improving the light output uniformity of the first light guide plate 140. In another embodiment, the radius of curvature of the rounded corner RC may be approximately 0.001 mm, 0.002 mm, 0.003 mm, 0.004 mm, or 0.005 mm, but the invention is not limited thereto.

FIG. 6 is a schematic bottom view of the first light guide plate according to another embodiment of the present invention. The structures and advantages of the backlight module 100a in the present embodiment are similar to those of the embodiment shown in FIG. 1, and only the differences will be described below. Please refer to FIG. 6. At least a portion of the optical microstructures M are, for example, arranged irregularly along the normal direction N. For example, the optical microstructures M may include a plurality of microstructures Ma. The microstructures Ma are arranged along the normal direction N, and a distance G between the two adjacent microstructures Ma increases gradually along the normal direction N. As such, the light emission brightness of the side of the first light guide plate 140a away from the first light incident surface 141 may be increased, and the light emission brightness of the side of the first light guide plate 140a adjacent to the first light incident surface 141 may be decreased, leading to a better uniformity of the light emission brightness of the first light guide plate 140a, thereby improving the optical taste of the backlight module 100a.

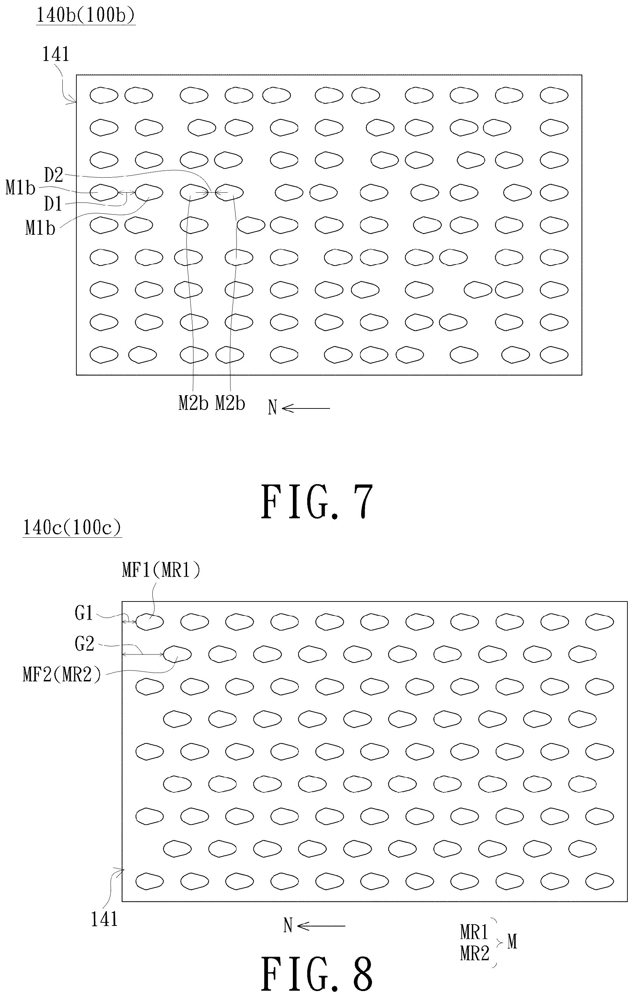

FIG. 7 is a schematic bottom view of the first light guide plate according to another embodiment of the present invention. The structures and advantages of the backlight module 100b of the present embodiment is similar to those of the embodiment shown in FIG. 1, and only the differences will be described below. Please refer to FIG. 7. At least a portion of the optical microstructures M are arranged irregularly along the normal direction N. In this embodiment, the optical microstructures M are arranged randomly along the normal direction N, for example. Specifically, in the first light guide plate 140b in the present embodiment, the microstructures Mb may include two first microstructures M1b and two second microstructures M2b. The two first microstructures M1b are adjacent to each other and have a distance D1 therebetween, and the two second microstructures M2b are adjacent to each other and have a distance D2 therebetween, where 10⁻⁶ ≦ |D1-D2|/D1 ≦ 10⁻⁴. For example, in the present embodiment, 0.1 nm ≦ ID1-D21 ≦ 0.5 nm. In brief, the arrangement of the microstructures Mb in the present embodiment may be achieved by increasing or decreasing the distance between the adjacent optical microstructures M in FIG. 3. For example, the two adjacent optical microstructures M in FIG. 3 have a distance D3. By increasing or decreasing each distance D3 by an arbitrary value within a predetermined range, the arrangement of the microstructures Mb in FIG. 7 may be obtained. The predetermined range may include 0.1 nm to 0.5 nm, i.e., |D3-D2| may be between 0.1 nm and 0.5 nm, though the invention is not limited thereto. In an embodiment, 0.01 mm ≦ D1 ≦ 0.07 mm, and 0.01 mm ≦ D2 ≦ 0.07 mm. It is understood that the aforementioned range of |D1-D2| is not limited to the arrangement of the optical microstructures M in FIG. 7. For example, the microstructures Mb may be arranged in a manner as illustrated in FIG. 3, FIG. 6, or FIG. 8, but the invention is not limited thereto.

FIG. 8 is a schematic bottom view of the first light guide plate according to another embodiment of the present invention. The structures and advantages of the backlight module 100c of the present embodiment is similar to those of the embodiment shown in FIG. 1, and only the differences will be described below. Please refer to FIG. 8. The optical microstructures M includes a plurality of first-row microstructures MR1 and a plurality of second-row microstructures MR2. The first-row microstructures MR1 and the second-row microstructures MR2 are arranged along the normal direction N. The first-row microstructures MR1 and the second-row microstructures MR2 are arranged side by side. The optical microstructure MF1 closest to the first light incident surface 141 in the first-row microstructures MR1 is spaced from the first light incident surface 141 by a first distance G1, and the optical microstructure MF2 closest to the first light incident surface 141 in the second-row microstructures MR2 is spaced from the first light incident surface 141 by a second distance G2. The first distance G1 is different from the second distance G2. Accordingly, the optical microstructures MF1 and MF2 may reflect light beams at different locations, thereby reducing light streaks formed on the first light guide plate 140c due to concentrated light emission, and therefore enhancing the light output uniformity on the side of the first light guide plate 140c adjacent to the first light incident surface 141. In the embodiment, the first distance G1 is, for example, a distance between the optical microstructure MF1 and the first light guide plate 140c in the normal direction N. The second distance G2 may be a distance between the optical microstructure MF2 and the first light guide plate 140c in the normal direction N. In addition, the first-row microstructures MR1 and the second-row microstructures MR2 may be arranged equidistantly along the normal direction N. However, in other embodiments, the first-row microstructures MR1 and the second-row microstructures MR2 may be arranged non-equidistantly along the normal direction N. It is noted that the arrangement of the optical microstructures M in the embodiment may be achieved by increasing or decreasing the distance D3 in FIG. 3. The detailed method has been previously described and will not be reiterated herein.

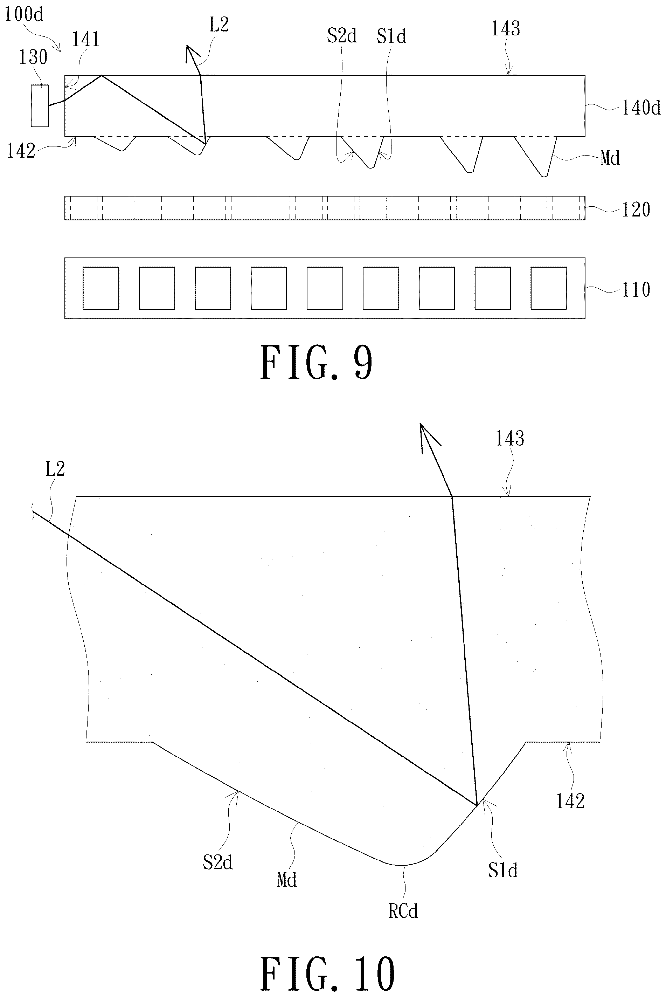

FIG. 9 is a schematic side view of a backlight module according to another embodiment of the present invention. FIG. 10 is a schematic cross-sectional view of the magnified optical microstructures in FIG. 9. The structures and advantages of the backlight module 100d of the present embodiment is similar to those of the embodiment shown in FIG. 1, and only the differences will be described below. Please refer to FIG. 9 and FIG. 10. The optical microstructures Md protrude the surface 142. The first convex surface S1d faces away from the first light incident surface 141, and the second convex surface S2d faces toward the first light incident surface 141. More specifically, after most of the light beams L2 enter the first light guide plate 140d from the first light incident surface 141, they may be totally internally reflected by the light emitting surface 143 to the first convex surface S1d, and then reflected by the first convex surface S1d to the light emitting surface 143, thereby being emitted from the light emitting surface 143 at a large angle. Similarly, most of the light beams L2 are reflected to the light emitting surface 143 by the rounded corner RCd and the second convex surface S2d. It should be noted that the first angle A1 is located on one side of the optical microstructure Md away from the first light incident surface 141, the rounded corner RCd protrudes away from the light emitting surface 143, and the second angle A2 is located on another side of the optical microstructure Md facing the first light incident surface 141. Other features of the optical microstructure Md are similar to those of the embodiment illustrated in FIG. 1, and therefore the related descriptions are omitted herein. It is understood that the illustrated light path of the light beams L2 in this embodiment is merely schematic and is not intended to limit the present invention.

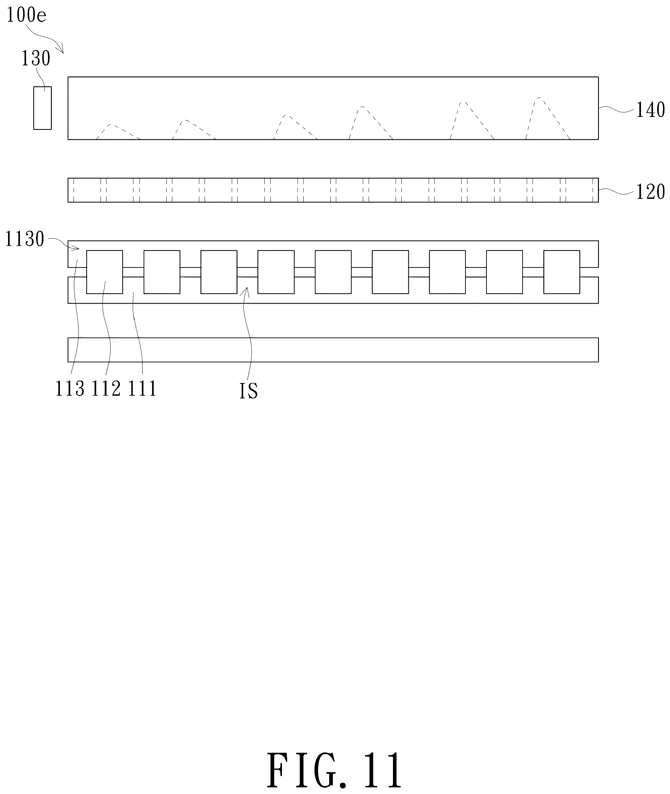

FIG. 11 is a schematic side view of a backlight module according to another embodiment of the present invention. The structures and advantages of the backlight module 100e of the present embodiment is similar to those of the embodiment shown in FIG. 1, and only the differences will be described below. Please refer to FIG. 11. The light source assembly 110e further includes, for example, a third light guide plate 113. The third light guide plate 113 is disposed between the second light guide plate 111 and the privacy film 120. The third light guide plate 113 includes a third light incident surface 1130 corresponding to the second light incident surface IS. The second light-emitting element 112 is disposed opposite to the second light incident surface IS and the third light incident surface 1130. More specifically, the second light-emitting element 112 may project light beams toward the second light incident surface IS and the third light incident surface 1130 at the same time. After that, the light beams are guided to enter the third light guide plate 113 by the second light guide plate 111, and then guided to enter the privacy film 120 by the third light guide plate 113. It is noted that a quantity of the third light guide plate 113 in the present embodiment may be one. However, in other embodiments, the quantity of the third light guide plate 113 may be multiple. However, the invention is not limited thereto.

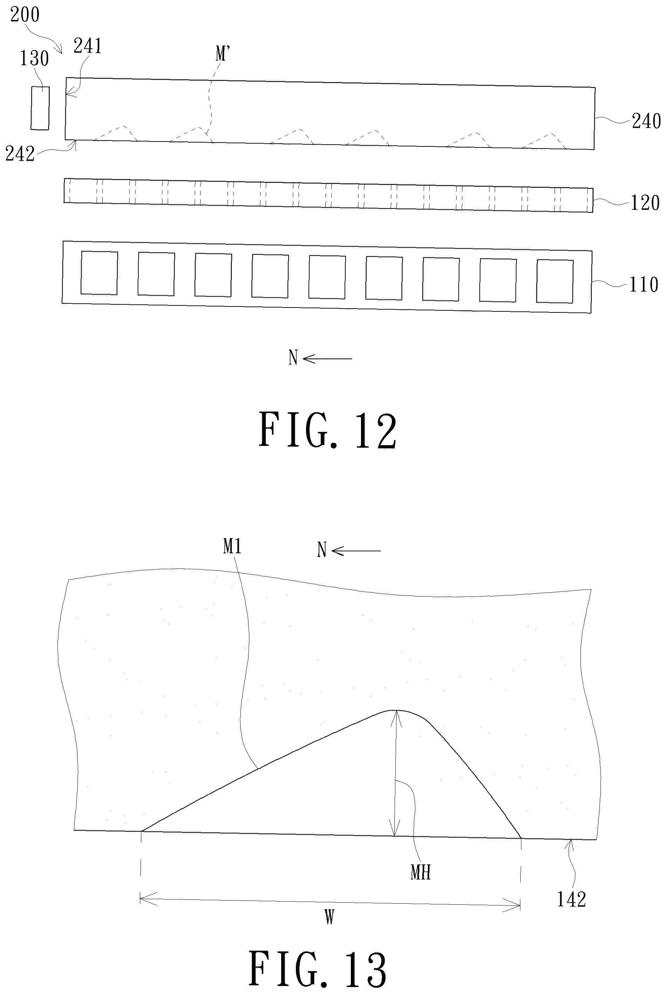

FIG. 12 is a schematic side view of a backlight module according to another embodiment of the present invention. FIG. 13 is a schematic cross-sectional view of the magnified optical microstructures in FIG. 12. Please refer to FIG. 12 and FIG. 13. The backlight module 200 includes the light source assembly 110, the privacy film 120, the first light-emitting element 130, and the first light guide plate 240. Each of the optical microstructures M' of the first light guide plate 240 has a maximum height MH relative to the surface 242, and each of the optical microstructures M' has a maximum width W on the normal direction N of the first light incident surface 241, where 0.2 ≦ MH/W ≦ 0.5. Also, in an embodiment, the maximum height MH of each of the optical microstructures M' may gradually decrease along the normal direction N, similar to the optical microstructures M shown in FIG. 1. Other features of the optical microstructures M' are the same as those of the optical microstructures M shown in FIG. 1, and therefore the related descriptions are omitted herein. Similarly, other features of the light source assembly 110, the privacy film 120, and the first light-emitting element 130 are the same as those in the embodiment of FIG. 1, and therefore the related descriptions are also omitted herein.

Compared to conventional technologies, the backlight module 200 of the present embodiment utilizes the optical microstructures M' in the first light guide plate 240, which are characterized by an aspect ratio (MH/W) between 0.2 and 0.5. Specifically, within the aspect ratio range of 0.2 to 0.5, the height of each optical microstructure M' may be adjusted based on the distance between the individual optical microstructure M' and the first light incident surface 241, thereby modifying the amount of light reflected by each optical microstructure M' and consequently adjusting the light output at different positions of the first light guide plate 240. Additionally, the first light guide plate 240 is disposed along the light transmission path of the light beam L1 from the light source assembly 110. Within the aspect ratio range, not only the emission angle of the light beam L1 can be controlled, but the size of the optical microstructures M' can also be reduced, thereby reducing the occurrence of bright spots caused by the passage of the light beam L1 through the optical microstructures M'. Accordingly, the optical microstructures M' can effectively improve the light output uniformity of the first light guide plate 240, thereby enhancing the optical taste of the backlight module 200.

As described above, in the backlight module of the present invention, the optical microstructures in the first light guide plate are characterized by a height that gradually decreases along the normal direction. Specifically, the optical microstructures with a gradually decreasing height along the normal direction are capable of reducing the light emission brightness on the side of the first light guide plate adjacent to the first light incident surface, while increasing the light emission brightness on the side away from the first light incident surface. Accordingly, the optical microstructures can effectively enhance the light output uniformity of the first light guide plate, thereby improving the optical taste of the backlight module.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A backlight module (100), comprising:
a light source assembly (110), adapted to emit a light beam;
a privacy film (120), disposed on a transmission path of the light beam;
a first light-emitting element (130); and
a first light guide plate (140), disposed on a side of the privacy film (120) away from the first light-emitting element (130),
**characterized in that** the first light guide plate (140) comprises a first light incident surface (141), a surface (142), and a plurality of optical microstructures (M), the first light incident surface (141) is opposite to the first light-emitting element (130), the surface (142) faces the privacy film (120) and is connected to the first light incident surface (141), the optical microstructures (M) are recessed or protrude from the surface (142), each of the microstructures (M) has a height (H) relative to the surface (142), and each of the heights (H) gradually decreases along a normal direction of the first light incident surface (141).

2. The backlight module (100) according to claim 1, **characterized in that** the surface (142) comprises a near-light region (1421), an intermediate region (1422), and a far-light region (1423), the near-light region (1421) is connected to the first light incident surface (141), the first light guide plate (140) comprises an end surface (144) opposite to the first light incident surface (141), the far-light region (1423) is connected to the end surface (144), the intermediate region (1422) is disposed between the near-light region (1421) and the far-light region (1423), the optical microstructures (M) comprise a plurality of near-light microstructures (M1), a plurality of intermediate microstructures (M2), and a plurality of far-light microstructures (M3), the near-light microstructures (M1) are disposed in the near-light region (1421) and have a first maximum height difference among the near-light microstructures (M1), the intermediate microstructures (M2) are disposed in the intermediate region (1422) and have a second maximum height difference among the intermediate microstructures (M2), the far-light microstructures (M3) are disposed in the far-light region (1423) and have a third maximum height difference among the far-light microstructures (M3), and the second maximum height difference is greater than the first maximum height difference and the third maximum height difference.

3. The backlight module (100) according to claim 2, **characterized in that** the two adjacent near-light microstructures (M1) along the normal direction have a first height difference therebetween, the two adjacent intermediate microstructures (M2) along the normal direction have a second height difference therebetween, the two adjacent far-light microstructures (M3) along the normal direction have a third height difference therebetween, and the second height difference is greater than the first height difference and the third height difference.

4. The backlight module (100) according to claim 2, **characterized in that** a length of the surface (142) of the first light guide plate (140) along the normal direction is L, a length of the intermediate region (1422) along the normal direction is L1, and 0.2L ≦ L1 ≦ 0.7L.

5. The backlight module (100) according to claim 1, **characterized in that** at least a part of the optical microstructures (M) are arranged irregularly along the normal direction.

6. The backlight module (100a) according to claim 5, **characterized in that** the optical microstructures (M) comprise a plurality of microstructures (Ma) arranged along the normal direction, and a distance between the two adjacent microstructures (Ma) increases gradually along the normal direction.

7. The backlight module (100b) according to claim 5, **characterized in that** the optical microstructures (M) comprise a plurality of microstructures (Mb), the microstructures (Mb) are arranged along the normal direction and comprise two first microstructures (M1b) and two second microstructures (M2b), the two first microstructures (M1b) are adjacent to each other and have a distance D1 therebetween, the two second microstructures (M2b) are adjacent to each other and have a distance D2 therebetween, and 10⁻⁶ ≦ |D1-D2|/D1 ≦ 10⁻⁴.

8. The backlight module (100) according to claim 7, **characterized in that** 0.1 nm ≦ |D1-D2| ≦ 0.5 nm.

9. The backlight module (100) according to claim 7, **characterized in that** 0.1 nm ≦ |D1-D2| ≦ 0.5 nm, and 0.01 mm ≦ D2 ≦ 0.07 mm.

10. The backlight module (100) according to claim 1, **characterized in that** each of the optical microstructures (M) has a top on one side away from the surface (142), each of the optical microstructures (M) has a maximum height MH between each of the tops and the surface (142), each of the optical microstructures (M) has a maximum width W in the normal direction, and 0.2 ≦ MH/W ≦ 0.5.

11. The backlight module (100c) according to claim 1, **characterized in that** the optical microstructures (M) comprises a plurality of first-row microstructures (MR1) and a plurality of second-row microstructures (MR2), the first-row microstructures (MR1) and the second-row microstructures (MR2) are arranged along the normal direction, the first-row microstructures (MR1) and the second-row microstructures (MR2) are arranged side by side, the optical microstructure (M) closest to the first light incident surface (141) in the first-row microstructures (MR1) is spaced from the first light incident surface (141) by a first distance, the optical microstructure (M) closest to the first light incident surface (141) in the second-row microstructures (MR2) is spaced from the first light incident surface (141) by a second distance, and the first distance is different from the second distance.

12. The backlight module (100) according to claim 1, **characterized in that** the light source assembly (110) comprises a second light guide plate (111) and a second light-emitting element (112), the second light guide plate (111) comprises a second light incident surface (IS) and a light emitting surface (ES) connected to each other, the light emitting surface (ES) faces the privacy film (120), and the second light-emitting element (112) and the second light incident surface (IS) are opposite to each other.

13. The backlight module (100e) according to claim 12, **characterized in that** the light source assembly (110e) further comprises a third light guide plate (113) , the third light guide plate (113) is disposed between the second light guide plate (111) and the privacy film (120), the third light guide plate (113) comprises a third light incident surface (1130) corresponding to the second light incident surface (IS), and the second light-emitting element (112) is disposed opposite to the second light incident surface (IS) and the third light incident surface (1130).

14. The backlight module (100) according to claim 13, **characterized in that** the surface (142) of the first light guide plate (140) comprises a first edge (E1) and a second edge (E2) connected to the first edge (E1), the light emitting surface (ES) of the second light guide plate (111) comprises a third edge (E3) aligned with the first edge (E1), the first light-emitting element (130) is disposed along the second edge (E2), and the second light-emitting element (112) is disposed along the third edge (E3).
